# EUROPEAN PATENT SPECIFICATION

(11) **EP 2 053 889 B1**
(45) Date of publication and mention of the grant of the patent: **23.05.2012**
(21) Application number: 09002066.0
(22) Date of filing: 23.10.2000
(51) Int. Cl.: H04W 48/16

(54) **Method of updating a control channel list in mobile communications system**
Verfahren zur Aktualisierung einer Kontrolkanalliste in einem Mobilkommunikationssystem
Procédé de mise à jour de liste de canaux de commande dans un système de communications mobiles

(30) Priority: 25.10.1999 GB 9925234
(43) Date of publication of application: 29.04.2009
(62) Divisional of application: 00971553.3
(73) Proprietor: Sepura PLC, Cambridge CB4 1GR (GB)
(72) Inventor: Rayne, Mark Wentworth, Stretham Nr. Ely Cambridgeshire CB6 3ND (GB); McMahon, Paul, Hardwick Cambridge CB3 7QQ (GB)
(74) Representative: Tothill, John Paul

(56) References cited:
- EP-A- 0 522 885
- EP-A- 0 948 226
- WO-A-93/23963
- WO-A-97/36449
- US-A- 5 794 147

## Description

The present invention relates to mobile radio communications systems and in particular to a method of and an apparatus for enabling a mobile radio unit of a mobile radio communications system to find and acquire a radio channel for communicating with a base station of the mobile radio communications system.

As is known in the art, for a mobile radio unit of a mobile radio communications system to be able to communicate with the fixed radio network (and thereby operate in the radio system), the mobile radio unit must be tuned to a radio channel of a base station of the mobile radio system. This means that whenever a mobile radio unit first becomes active, or migrates into a new area, it must, before it can communicate with the radio system, identify and synchronise to a suitable base station radio channel.

Similarly, if it is necessary for a mobile radio unit to be handed over from a first base station to a second base station during an on-going call, the mobile radio unit must be able to identify and synchronise to a radio channel of the new base station.

To minimise any interruption in communication when a mobile radio unit needs to find the new base station, it is desirable for the mobile radio unit to be able to recognise and synchronise to the new base station radio channel as quickly as possible, particularly during a handover (as handover desirably occurs with the minimum possible interruption in communication).

To facilitate the identification of and subsequent synchronisation to a suitable base radio station channel, mobile radio units will typically, as is known in the art, store a list of radio frequencies used by base stations of the radio system, and, when it is necessary to find a new radio channel, tune in turn to each frequency in the stored list and attempt to synchronise on each frequency until a suitable radio channel is found.

The channel synchronisation search typically comprises the mobile radio unit listening on the particular frequency for a limited period of time to try to detect special synchronisation signalling which should be present on the frequency if it is available and suitable for the mobile radio unit to use. If the mobile radio unit does not detect the synchronisation signalling during the waiting time period, the mobile radio unit will turn to another frequency on its list, and so on, until it succeeds in synchronising on a frequency with a suitable signal.

However, in many mobile radio systems, the synchronisation signals may only be broadcast at intervals. For example, synchronisation signals are broadcast at intervals of 235 ms in the GSM (Global System for Mobile communications) system. In the TETRA (TErrestrial Trunked RAdio) system, synchronisation signals may only be broadcast at intervals of up to 4 seconds.

The search waiting time period on each frequency must therefore be at least the expected interval between synchronisation signals to allow sufficient time for a synchronisation signal to be received, before trying another frequency. In practice, the waiting time will often be longer than a single synchronisation signal interval, as typically, sufficient time to receive two or three synchronisation signals is allowed on each frequency in order to, for example, reduce the effects of fading causing suitable synchronisation signals to be improperly received.

Thus, for example, to identify and synchronise on a good TETRA signal could take well over 1 minute if the mobile radio unit has just been switched on in a new area and it has a list of, for example, sixty possible frequencies to search. Such delay in channel acquisition is undesirable, as it increases the interruption in communications when a new radio channel is required.

It is known therefore to modify the base station radio channel search process to try to reduce the possible delay in identifying and synchronising to a new base station radio channel.

For example, in some radio systems, including the TETRA system, the frequencies used by adjacent base stations may be broadcast to mobile radio units, so that the number of frequencies to be searched for a suitable radio signal when moving to an adjacent area can be reduced. However, even in that case, having to pause on each possible frequency for several seconds from even a reduced search list can still mean that it takes up to a minute to find a strong signal and synchronise to it.

Another common method of speeding up the scanning of potential frequencies in the frequency list is to tune to each of the frequencies for a relatively short period of time to measure the signal level on the frequency (but not necessarily long enough to receive a synchronisation signal). The mobile radio unit then records the signal level and moves on to the next frequency to be inspected. This process is typically repeated several times, as is known in the art, to build up a set of spaced signal level measurements for each frequency, which measurements are then, for example, averaged to give an overall signal level estimate for the frequency. When the mobile radio unit has been through its list of candidate frequencies a sufficient number of times, it ranks them in order of signal level and, starting with the frequency having the highest measured signal level, returns to the frequencies to listen for a longer period of time for synchronisation signals on each frequency in turn until it achieves synchronisation.

This technique helps to reduce the radio channel acquisition time. However, the Applicants have recognised that it can still have problems. For example, frequencies on which there are strong interfering signals with relatively high signal levels will still tend to be placed at the top of the revised list of frequencies to be examined in detail following the initial faster frequency scan, even if those frequencies could in practice be unusable. Thus a mobile radio unit may still waste time trying to obtain synchronisation on an inappropriate signal before working on down its list to choose a compatible base station radio channel.

EP 0522885, over which the independent claims are characterised, discloses a method and arrangement of detecting a control channel in a mobile communications system. EP 0948226 discloses a method of operating a code division multiple access (CDMA) mobile station. US 5794147 discloses a method for locating non-standard control channels in private cellular systems.

In an aspect of the present invention there is provided a method as claimed in claim 1. In another aspect of the present invention there is provided a mobile radio unit as claimed in claim 7.

According to an embodiment of the present invention, the mobile radio unit stores a list of target frequencies to scan for a suitable frequency for communicating with a base station of the radio system, and the method further comprises:
the mobile radio unit scanning each frequency in its list, and determining for each frequency the signal level of the signal on that frequency;
the mobile radio unit determining a revised frequency order on the basis of the determined signal levels and the characteristic assessments for each frequency; and
the mobile radio unit then attempting to synchronise to the frequencies in the revised frequency order in the order of the revised frequency order.

According to an embodiment of the present invention, plural frequencies are used for radio communications, and the mobile radio unit further comprises:
means for storing the list of frequencies used by the radio system;
means for determining for each scanned frequency the signal level of the signal on that frequency;
means for determining a revised frequency order based on the determined signal levels of each frequency and the assessments of whether each frequency has the particular characteristic of the radio system; and
means for attempting to synchronise to the frequencies in the revised frequency order in the order of the revised frequency order.

In an embodiment of the present invention, as in the known frequency searching techniques, an initial scan of the frequency list stored by the mobile radio unit is carried out, but as well as determining the signal level of each frequency during the initial scan, an assessment of whether the signal on the particular frequency has a particular characteristic of the radio system is also made. The signal level and characteristic assessment results are then used together to derive a revised order in which to scan the frequencies for synchronisation signals.

The Applicants have recognised that many radio systems will have characteristic properties to their signals that can be relatively rapidly identified and will distinguish them from signals of other radio systems. Thus assessing whether the signal on each frequency has the relevant particular characteristic gives an assessment of the likelihood of the signal on that frequency being from the correct radio system. The assessment of whether the signal has the relevant particular characteristic can also give a measure of how 'useful' the signal is likely to be, since, if the signal shows the relevant signal characteristic strongly, that would suggest that the signal is valid and useful.

Thus the assessment of whether the signal has the relevant particular characteristic can be used to place signals more likely to be from the correct radio system and more likely to be useable towards the top of the revised frequency list for the synchronisation scan so as to reduce the possibility of trying to synchronise to an alien or incompatible signal before more suitable signals are considered.

Thus embodiment of the present invention provide a refined process for selecting those signals (i.e. frequencies) to attempt to synchronise to first, which can be used to improve the order in which the frequencies are scanned for synchronisation to scan what appear to be more suitable signals first and thereby to reduce the possibility of wasting time trying to synchronise on incompatible signals and to improve the speed at which a new suitable frequency (and therefore base station) is acquired.

The initial faster frequency scan can be carried out as desired. For example, the mobile radio unit could pause once on each frequency in its list in turn to carry out the signal assessment. However, the initial scan is preferably carried out by the mobile unit carrying out plural measurements at spaced intervals on each frequency, preferably by returning to each frequency to be scanned at spaced intervals during the initial scan, e.g. such that an assessment is carried out on each frequency in turn and the cycle of measurements over the different frequencies is repeated several (i.e. two or more) times. This method ensures that successively assessed signal samples on the same frequency are relatively well-spaced in time, thereby providing better averaging of the measurements, and helping to ensure that not all measurements on a frequency are made during the same fade (unless the receiver is stationary).

The frequency list to be scanned could be the list of all frequencies used by the radio system, or it could be a reduced list, for example of only those frequencies known to be in use in the particular area, or in adjacent cells, as is known in the art.

The signal level for each frequency can be estimated as desired and in any suitable manner known in the art.

The characteristic of the radio system for which the signals are assessed can be selected as desired. It should be a characteristic of the system that can be used to distinguish it from other radio systems. It should also not take too long to assess and preferably can be assessed in the same time that it takes to determine the signal level, i.e. such that the characteristic assessment does not extend the duration of the initial faster frequency scan. More than one characteristic can be considered if desired. Preferably, the characteristic of the signal is assessed, and the observed signal characteristics are then compared with the expected characteristics for the radio system, e.g. to see how well they correspond, to assess whether the signal has the required characteristic.

In a particularly preferred embodiment, the signal characteristic assessment comprises assessing whether the signal has a characteristic of the radio modulation scheme used in the radio system. The Applicants have recognised that many radio systems use particular radio modulation schemes which modulation schemes have particular characteristics that can be assessed relatively quickly. Thus considering the modulation of the signal can give a good assessment of its suitability.

For example, in the TETRA system, n/4 DQPSK (π/4 Differential Quaternary Phase-Shift Keying) modulation is employed. This form of modulation has the particular characteristic that there is a +/- n/4 or +/- 3n/4 radians phase shift between each transmitted symbol (there is never a phase shift of zero radians). The GSM system, on the other hand, uses GMSK (Gaussian Minimum Shift Keying) modulation, which employs phase shifts of +/- n/2 radians relative to a steady RF (radio frequency) carrier. In this case a phase shift of zero is permitted, so a characteristic of GMSK modulation is the presence of phase shifts of either zero radians or n radians between successive symbols (more specifically a +π is always followed by either 0 or -n, and no +n may follow +n and any subsequent 0's until a -n has occurred; a -n is always followed by either 0 or +π, and no -n may follow -n and any subsequent 0's until a +n has occurred). Other modulation schemes (such as 16QAM) have other characteristics which can be detected in an appropriate manner. For example, a four-level FM modulation scheme will exhibit FM modulation with transitions between four different modulating frequencies, and so will show characteristic frequency shifts.

Thus in a particularly preferred embodiment, the assessment of whether the signal on a particular frequency has the particular characteristic of the radio system comprises an assessment of whether the signal exhibits the particular phase or frequency shift characteristics of the radio system's modulation scheme. This could be assessed by analysing the phase or frequency shifts between successive selected samples or portions, e.g. symbols, in the signal on the frequency and comparing the observed phase or frequency shifts with the expected phase or frequency shifts for the wanted modulation scheme, e.g. to see how well they correspond, to assess whether the signal carries the required form of modulation.

The analysis of the phase or frequency shifts can be carried out as desired and should be carried out at the same time as the signal level determination is carried out. Thus, in a TETRA system, for example, during the, say, 5 ms used to measure and average the signal level, the phase shifts between each successive symbol received during that period could be measured. Similarly where a frequency is assessed several times in the initial scan, by, e.g. measuring the signal level and modulation characteristics for a shorter time, e.g. 1 ms, and then changing frequency and repeating the cycle, e.g. 5 times and averaging the five measurements, the phase shifts between each successive symbol received during each scanning period could be measured. In the TETRA system, each symbol has a duration of 56 microseconds, so in the TETRA system up to 90 symbol phase shifts could be examined in the 5 ms period (or up to 18 in a 1 ms period).

The measured phase or frequency shifts can be used as desired to assess whether the signal has the particular characteristic. For example, the actual values of the phase shifts could be considered. The assessment could, for example, comprise looking at whether appropriate values and/or sequences of phase or frequency shifts are observed.

For example, if a TETRA signal was being sought, but random phase shifts are detected, then that would indicate a very poor TETRA signal. If phase shifts close to 0 or n/2 were prevalent, that would indicate a strong interfering signal using a different modulation scheme.

In another arrangement the measured phase shifts for the symbols could be mapped to a common (e.g. the first) quadrant (i.e. have their modulation induced phase differences removed) to obtain a mean phase shift value and that value compared with the expected value for the modulation scheme used by the radio system. The variation in the values could also be considered.

In a particularly preferred embodiment, the assessment of whether or not the scanned signal has the particular characteristic comprises allocating a probability that the signal has that characteristic based on the assessment of the signal. Preferably three levels of relative probability, low, medium and high, are used. Thus preferably the fit of the candidate signal to the desired characteristic is measured on a probability scale and the probability of a match, e.g. the probability that it carries the required form of modulation, recorded. For example, the deviation of the mean phase or frequency shift from the expected value if the signal were to carry the correct form of modulation and/or the proportion of measured phase or frequency shift values having the value of the wanted modulation scheme, could be used to classify how likely the signal is to be from the correct radio system.

The reordering of the list of frequencies after the initial faster scan has been completed can be carried out as desired, based on the determined signal levels and radio system characteristic assessments.

The Applicants have recognised that a valid but weak signal will tend to exhibit a low to medium probability of being valid for the radio system (since weak signals will tend to suffer from much multipath distortion and this will introduce errors into the signal), but a higher signal level, valid signal, will have a higher probability. On the other hand, a strong signal showing a low probability of being valid can reasonably be rejected.

Thus in a particularly preferred embodiment the frequencies having signals having a high probability of being valid (i.e. assessed to be likely to have the particular characteristic) are considered first, preferably in signal level order (highest first), and so on, with the signals having the lowest probability of being valid being considered last. In such an arrangement, the mobile radio unit will attempt to synchronise to signals having a higher signal level and a good assessment that they have the particular characteristic first, and only after synchronisation to those signals has failed will the mobile radio unit then attempt to synchronise on signals assessed to have a lower probability of being valid.

The revised frequency order which is used for the synchronisation scan can include all the frequencies in the initial faster frequency scan list, but this is not essential and it could include less frequencies. For example, in a preferred embodiment, signals found to have an undesirably low signal level are not included in the synchronisation scan. This can be achieved by using a threshold signal level to eliminate signals of undesirably low signal level from the synchronisation scan. Similarly, signals having less than a given probability of having the correct radio system characteristic could be eliminated from and not included in the revised synchronisation scan frequency order list.

The synchronisation scan should typically be stopped once the mobile unit finds a suitable frequency to synchronise to. If the mobile unit scans all the frequencies in the revised frequency order list in turn without finding a suitable signal, it could stop its synchronisation scan then (and, for example, inform the user accordingly), or, for example, repeat the scan (for, e.g., up to a predetermined number of times) before finally determining that synchronisation is not possible.

In a particularly preferred embodiment of the present invention, during the synchronisation scan when the mobile radio unit is waiting for a synchronisation signal and attempting to synchronise to each frequency, the mobile radio unit carries out an assessment of whether the signal it is attempting to synchronise to does have the particular characteristic of the radio system, i.e. does belong to its radio system, and interrupts and aborts its wait and synchronisation attempt on that frequency, and switches onto the next frequency in its list, if it determines that the signal does not have the particular characteristics (i.e. does not belong to its radio system), e.g. it determines that there is greater than a particular probability that the signal does not have the particular characteristic. This allows the radio unit to abort earlier a synchronisation attempt on an unsuitable frequency. This arrangement may be advantageous, because the pause on a given frequency when attempting to synchronise is longer than the time taken to assess each signal during the initial faster frequency scan, and thus a more reliable signal characteristic assessment may be able to be made, as, e.g. the mobile radio unit will have longer to integrate the phase shifts between symbols, than during the initial faster frequency scan.

It is believed that using an assessment of the validity of a radio signal to abort a synchronisation attempt is new and useful in its own right.

Again, the assessment of whether the radio signal has a particular characteristic of the radio system is preferably based on assessing whether or not it has a characteristic of the radio modulation scheme used by the radio system.

Although the present invention has been described above with regard to the synchronisation scan operation of a mobile radio unit seeking a radio channel, it is believed that the idea of assessing whether a radio signal on a given frequency has a particular characteristic of a given radio system may be useful in other circumstances as well. For example, in some non-trunked radio systems a mobile radio unit may need to establish that a radio frequency is available for use, i.e. that there is no signal from another radio unit of the same radio system present on the frequency, before it can seize the frequency for its use. For example, in TETRA direct mode, a new transmitter is not permitted to start using a radio channel (frequency) until it has verified that there is not a TETRA signal already present above some low signal level threshold, i.e. the channel is "empty". Such assessment could be carried out by assessing whether there is a signal on the frequency having the characteristics, e.g. modulation, of the particular radio system.

Thus there may be situations where a mobile radio unit needs to be able to confirm the absence of a particular type of signal, and it is believed that the technique of the present invention of assessing whether the signal on a frequency has a particular characteristic of a radio system could be used advantageously for such verification

Thus, according to an embodiment of the present invention, the method comprises the mobile radio unit:
making a determination as to whether or not the frequency already carries a signal of the radio system based on the characteristic assessment for the frequency.

According to an embodiment of the present invention, the mobile radio unit comprises:
means for making a determination as to whether or
not the frequency already carries a signal of the radio system based on the characteristic assessment for the frequency.

In these embodiments of the present invention, the mobile radio unit preferably determines whether or not to perform an action in relation to the particular radio frequency, such as, for example, transmitting on the frequency or attempting to synchronise on the frequency, on the basis of the characteristic assessment for the frequency.

These embodiments of the present invention can include, appropriately, any or all of the preferred and optional features discussed above in relation to the aspects of the invention. Thus, the assessment of whether the signal has the relevant particular characteristic is preferably based on assessing whether or not it has a characteristic of the radio modulation scheme, such as particular frequency or phase shifts, used by the radio system.

In this arrangement where appropriate, the mobile radio unit could search or scan through a list of frequencies used by the system, and carry out an assessment on each frequency, until such time as it finds a free frequency for its use.

The methods in accordance with the present invention may be implemented at least partially using software e.g. computer programs. It will thus be seen that embodiments of the present invention provide computer software specifically adapted to carry out the methods hereinabove described when installed on data processing means, and a computer program element comprising computer software code portions for performing the methods hereinabove described when installed on data processing means. Embodiments of the invention also extends to a computer software carrier comprising such software which when used to operate a mobile radio unit or a radio system comprising a digital computer causes in conjunction with said computer said radio unit or system to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software and thus from a further broad embodiment of the present invention provides computer software and such software installed on a computer software carrier for carrying out at least one of the steps of the methods set out hereinabove.

A number of preferred embodiments of the present invention will now be described by way of example only.

The embodiments will be described with reference to the TETRA system, although as will be appreciated from the above, the invention is also applicable to other mobile radio communications systems, such as the GSM system.

An example of the operation of a mobile radio unit in accordance with the present invention when it is first switched on (i.e. of cold synchronisation) will now be considered.

For this example, we will suppose that the mobile radio unit stores a list of 60 frequencies where it can expect to find system synchronization signals, and requires 5 ms to tune its synthesizer to one of these frequencies, and a further 5 ms to measure the signal level on that frequency. We will further suppose that considering the TETRA specification, base stations of the radio system transmit synchronization bursts (signals) at 1 second intervals on their particular frequency, but that each synchronisation burst is in a different one of the 4 TETRA timeslots, so that it takes 4 seconds for a synchronization burst to be repeated on a particular timeslot.

When the mobile radio unit has just been switched on, its first task is to locate a TETRA radio system as quickly as possible. In the basic prior art system discussed above, the mobile unit would tune to each frequency in its stored list in turn and monitor each frequency for a minimum of 1 second, to be sure of listening at the time a base station would be transmitting a synchronization burst. The search time for the 60 frequencies will be of the order of 1 minute (but there is a 1 in 1080 chance that the search time will be only 15 ms and a 1 in 60. chance that the search time will be 1 second).

Now consider a more sophisticated mobile radio unit, operating the prior art technique of initially scanning all 60 channels in its list to build up a table of signal levels before attempting synchronisation. A fast scan duration of 5 seconds (which is a typical time selected for such a frequency scan, being a reasonable compromise between the need to sample signals over as great a distance as possible to help ensure sample de-correlation and the desire not to "waste" too much time doing the scan) will be assumed. At 5 ms tuning time and 5 ms signal level measurement time, this fast scan duration will give 8 spaced signal samples per frequency, which is a reasonable number. Having ordered the frequencies in order of signal level the mobile radio unit then returns to each frequency in the revised order to attempt synchronisation on that frequency. In the absence of interfering signals it should be able to synchronize after a further 1 second. Thus in this case the maximum time to synchronize should be 6 seconds (5 seconds to scan plus 1 second to synchronise), but there is a 1 in 18 chance of synchronizing in 5.015 seconds. It would not be possible to synchronize from cold faster than this.

However, as discussed previously, interfering signals will reduce the benefits of this method of searching. The interference could be accidental (e.g. vehicle ignition pulses or a nearby desktop or laptop computer), or it could be intentional transmissions from another system using a different modulation scheme. The latter is a potential problem for TETRA systems, which share frequencies with military users.

In the case where the two strongest signals turn out to be interference, the mobile radio unit in this example would still attempt to synchronise to those unsuitable signals first, thereby introducing a further delay of 8 seconds (it taking 4 seconds to reject each interference frequency). In this case the cold synchronization time would be at least 13.015 seconds (5 seconds to scan, 8 seconds to reject the two interference frequencies and 0.015 seconds to synchronise to the third frequency tested), but more probably 14 seconds.

Now consider a mobile radio unit which employs an embodiment of the present invention. It first performs a fast frequency scan in which it dwells on each frequency (at several spaced intervals) for 5 ms to record the average signal level, and at the same time records the digital samples received by its demodulator and using a digital signal processor, examines the recorded digital samples, looking for evidence of π/4 and 3π/4, but never zero, phase shifts at the expected symbol rate. The probability that this has been detected is stored with the averaged signal level. (This can be done while the mobile radio unit is tuning to the next frequency in the list.) This fast frequency scan would again, as discussed above, typically be arranged to be carried out over a period of the order of 5 seconds to try to ensure sufficient spaced samples for each frequency. After this initial "fast" frequency scan, the scanned frequencies are then ordered according to their averaged signal levels and the probability that their signal has the required particular modulation characteristics, to provide a revised scanning order list of the frequencies in the list.

In this case, if the two strongest signals are again interference, those frequencies will have strong signal levels, but low probabilities of having the particular modulation characteristic. Thus when the mobile radio unit has completed its fast scan, it will place those two strongest signals low in its revised frequency scanning order as they are recorded as having a low probability of bearing TETRA modulation. Instead, the mobile radio unit will tune straight to the third strongest signal, which, for example, has been recorded as having a medium or high probability of carrying TETRA modulation. Thus the mobile unit's cold synchronization delay would remain in the region of 5.015 to 6 seconds (i.e. 5 seconds to scan and 1 second to synchronise).

We will now consider what happens when a mobile radio unit needs to identify a new base station for handover, i.e. while it is engaged in a call.

In the first, basic prior art technique, discussed above, the mobile radio unit has to listen for each potential new base station in turn. The base stations' TDMA frame structures in TETRA are not synchronized, so in order to find a synchronization burst on an adjacent cell, the mobile station retunes its synthesizer between reception slots. This allows it to look for approximately two time slots for a possible synchronization burst on an adjacent cell before having to retune back to the serving cell frequency, and this can be done in each frame.

As the synchronization bursts cycle through the time slots the mobile radio unit will have to wait up to 4 seconds to ensure that a synchronization opportunity has occurred, before choosing a new frequency. At this rate, the mobile radio unit could take up to 4 minutes to synchronize to a new base station, by which time the call would most probably have been lost, even if the frequencies of the six adjacent cells had been broadcast to allow a reduced frequency list to be searched.

The more sophisticated prior art mobile radio unit of the previous example could attempt to keep its table of signal strengths always up to date. It might even attempt to store synchronization data on the best alternative base station, so that handover can be achieved without any searching delays. However, suppose that for some reason the signal strength table needs to be renewed (as could happen if the mobile radio unit has rounded a bend in a high-sided valley, or entered a new street in a high rise urban environment). As before, the mobile radio unit performs its fast scan of signal levels in 5 s, and then searches each entry in the list in sequence. Considering again the case where the two strongest signals are in fact interference, the mobile radio unit would have to pause on the unsuitable first 2 frequencies for at least 4 seconds each as before (or 8 seconds each, if giving the receiver 'two bites at the cherry' as is usual, to reduce the effects of fading). After pausing a further 4 (or 8) seconds on the third frequency in the list, it achieves synchronization, after a delay of between 13 and 17 seconds (or 21 and 29 seconds in a faded channel). The call might have been lost during this interval.

If the mobile radio unit employs an embodiment of the present invention, it will in this case rank the two strongest signals quite low, as shown in the previous example, and attempt to synchronize to the third strongest signal (i.e. the strongest signal showing a high probability of having the right modulation scheme). The synchronization delay is now reduced to between 5 and 9 seconds (or 13 seconds in a faded channel).

It can be seen from the above that the mobile radio unit operating in accordance with an embodiment of the present invention uses both the signal level and radio system characteristics derived during the initial faster frequency scan when deciding which frequencies to attempt to synchronise to. It in effect supplements the signal level information determined during the initial faster frequency scan with data indicating the probability that the corresponding signal is useful. This improves the ranking of the signals to then attempt to synchronise to, and thus reduces the probability of wasting time trying to synchronise on incompatible signals.

## Claims

1. A method of synchronising a mobile radio unit of a mobile radio communications system to a radio channel of the system, the method comprising:
the mobile radio unit scanning and attempting to synchronise to each frequency on a stored list of frequencies used by the radio system in turn;
**characterised in that** the method further comprises:
the mobile radio unit while it is waiting on a particular frequency for synchronisation signals to attempt to synchronise to the frequency, assessing whether the signal on the frequency has a particular characteristic of the radio system; and
the mobile radio unit aborting its wait on the particular frequency and tuning to a new frequency before the synchronisation attempt on the particular frequency is completed if it determines that the signal on the particular frequency does not have the particular characteristic.

2. The method of claim 1, wherein the signal characteristic assessment comprises assessing whether the signal has a characteristic of the radio modulation scheme used in the radio system.

3. The method of claim 2, wherein the signal characteristic assessment comprises assessing whether the signal exhibits particular phase or frequency shift characteristics of the radio system's modulation scheme.

4. The method of claim 3, wherein the step of assessing whether the signal exhibits particular phase or frequency shift characteristics of the radio system's modulation scheme comprises analysing the phase or frequency shifts between successive selected samples or portions in the signal on the frequency and comparing the observed phase or frequency shifts with the expected phase or frequency shifts for the wanted modulation scheme.

5. The method of claim 3 or 4, comprising using the deviation of the mean observed phase or frequency shift for the signal being assessed from the expected value if the signal were to carry the correct form of modulation and/or using the proportion of observed phase or frequency shift values having the value of the wanted modulation scheme, to classify how likely the signal is to be from the correct radio system.

6. The method of any one of the preceding claims, wherein the assessment of whether or not the signal has the particular characteristic comprises allocating a probability that the signal has that characteristic based on the assessment of the signal.

7. A mobile radio unit of a mobile radio communications system, the mobile radio unit comprising:
means for scanning and attempting to synchronise to each frequency on a stored list of frequencies used by the radio system in turn;
**characterised in that** the mobile radio unit further comprises:
means for, while the mobile radio unit is waiting on a particular frequency for synchronisation signals to attempt to synchronise to the frequency, assessing whether the signal on the frequency has a particular characteristic of the radio system; and
means for aborting the wait on the particular frequency and tuning to a new frequency before the synchronisation attempt on the particular frequency is completed if it is determined that the signal on the particular frequency does not have the particular characteristic.

8. The mobile unit of claim 7, wherein the signal characteristic assessment means comprises means for assessing whether the signal has a characteristic of the radio modulation scheme used in the radio system.

9. The mobile unit of claim 8, wherein the signal characteristic assessment means comprises means for assessing whether the signal exhibits particular phase or frequency shift characteristics of the radio system's modulation scheme.

10. The mobile unit of claim 9, comprising means for classifying how likely the signal is to be from the correct radio system on the basis of the deviation of the mean observed phase or frequency shift for the signal being assessed from the expected value if the signal were to carry the correct form of modulation and/or on the basis of the proportion of measured phase or frequency shift values having the value of the wanted modulation scheme.

11. A computer program element comprising computer software code portions for performing the method of any one of claims 1 to 6 when installed on data processing means.

## Patentansprüche

1. Verfahren zum Synchronisieren einer Mobilfunkeinheit eines Mobilfunk-Kommunikationssystems mit einem Funkkanal des Systems, wobei das Verfahren Folgendes umfasst:
der Reihe nach scannt die Mobilfunkeinheit jede Frequenz auf einer gespeicherten Liste von durch das Funksystem verwendeten Frequenzen und versucht, mit ihr zu synchronisieren;
**dadurch gekennzeichnet, dass** das Verfahren ferner Folgendes umfasst:
während sie auf einer bestimmten Frequenz auf Synchronisationssignale wartet, um zu versuchen, mit der Frequenz zu synchronisieren, beurteilt die Mobilfunkeinheit, ob das Signal auf der Frequenz ein bestimmtes Charakteristikum des Funksystems aufweist; und
die Mobilfunkeinheit bricht ihr Warten auf der bestimmten Frequenz ab und stellt sich auf eine neue Frequenz ein, bevor der Synchronisationsversuch auf der bestimmten Frequenz abgeschlossen ist, wenn sie bestimmt, dass das Signal auf der bestimmten Frequenz das bestimmte Charakteristikum nicht aufweist.

2. Verfahren nach Anspruch 1, wobei die Signalcharakteristikum-Ermittlung umfasst zu beurteilen, ob das Signal ein Charakteristikum des in dem Funksystem verwendeten Funkmodulationsschemas aufweist.

3. Verfahren nach Anspruch 2, wobei die Signalcharakteristikum-Ermittlung umfasst zu beurteilen, ob das Signal bestimmte Phasen- oder Frequenzverschiebungscharakteristika des Modulationsschemas des Funksystems zeigt.

4. Verfahren nach Anspruch 3, wobei der Schritt des Beurteilens, ob das Signal bestimmte Phasen- oder Frequenzverschiebungscharakteristika des Modulationsschemas des Funksystems zeigt, das Analysieren der Phasen- oder Frequenzverschiebungen zwischen sukzessiven ausgewählten Stichproben oder Teilen in dem Signal auf der Frequenz und das Vergleichen der beobachteten Phasen- oder Frequenzverschiebungen mit den erwarteten Phasen- oder Frequenzverschiebungen für das erwünschte Modulationsschema umfasst.

5. Verfahren nach Anspruch 3 oder 4, umfassend das Verwenden der Abweichung der mittleren beoabachteten Phasen- oder Frequenzverschiebung für das Signal, das beurteilt wird, von dem erwarteten Wert, wenn das Signal die korrekte Form von Modulation führen würde, und/oder Verwenden des Anteils beobachteter Phasen-oder Frequenzverschiebungswerte, die den Wert des erwünschten Modulationsschemas aufweisen, um zu klassifizieren, wie wahrscheinlich das Signal aus dem korrekten Funksystem stammt.

6. Verfahren nach einem der vorhergehenden Ansprüche, wobei die Beurteilung, ob das Signal das bestimmte Charakteristikum aufweist, das Vergeben einer Wahrscheinlichkeit, dass das Signal dieses Charakteristikum aufweist, auf der Basis der Beurteilung des Signals umfasst.

7. Mobilfunkeinheit eines Mobilfunk-Kommunikationssystems, wobei die Mobilfunkeinheit Folgendes umfasst: ein Mittel zum Scannen jeder Frequenz auf einer gespeicherten Liste von durch das Funksystem verwendeten Frequenzen und zum Versuchen, mit dieser zu synchronisieren, der Reihe nach;
**dadurch gekennzeichnet, dass** die Mobilfunkeinheit ferner Folgendes umfasst:
ein Mittel zum Beurteilen, während die Mobilfunkeinheit auf einer bestimmten Frequenz auf Synchronisationssignale wartet, um zu versuchen, mit der Frequenz zu synchronisieren, ob das Signal auf der Frequenz ein bestimmtes Charakteristikum des Funksystems aufweist; und
ein Mittel zum Abbrechen des Wartens auf der bestimmten Frequenz und Einstellen einer neuen Frequenz, bevor der Synchronisationsversuch auf der bestimmten Frequenz abgeschlossen ist, wenn bestimmt wird, dass das Signal auf der bestimmten Frequenz das bestimmte Charakteristikum nicht aufweist.

8. Mobileinheit nach Anspruch 7, wobei das Signalcharakteristikum-Beurteilungsmittel ein Mittel zum Beurteilen umfasst, ob das Signal ein Charakteristikum des in dem Funksystem verwendeten Funkmodulationsschema aufweist.

9. Mobileinheit nach Anspruch 8, wobei das Signalcharakteristikum-Beurteilungsmittel ein Mittel zum Beurteilen umfasst, ob das Signal bestimmte Phasen-oder Frequenzverschiebungscharakteristika des Modulationsschemas des Funksystems zeigt.

10. Mobileinheit nach Anspruch 9, umfassend Mittel zum Klassifizieren, wie wahrscheinlich das Signal von dem korrekten Funksystem stammt, auf der Basis der Abweichung der mittleren beobachteten Phasen- oder Frequenzverschiebung für das Signal, das beurteilt wird, von dem erwarteten Wert, wenn das Signal die korrekte Form von Modulation führen würde und/oder auf der Basis des Anteils der gemessenen Phasen- oder Frequenzverschiebungswerte, die den Wert des erwünschten Modulationsschemas aufweisen.

11. Computerprogrammelement, das Computersoftware-Codeteile zum Ausführen des Verfahrens nach einem der Ansprüche 1 bis 6, wenn es auf Datenverarbeitungsmittel installiert wird, umfasst.

## Revendications

1. Procédé de synchronisation d'une unité radio mobile d'un système de radiocommunication mobile sur un canal radio du système, le procédé comprenant l'étape, mise en oeuvre par l'unité radio mobile, consistant à :
balayer et tenter d'effectuer une synchronisation successivement sur chaque fréquence dans une liste mémorisée de fréquences utilisées par le système de radiocommunication ;
le procédé étant **caractérisé en ce qu'**il comprend en outre les étapes, mises en oeuvre par l'unité radio mobile, consistant à :
évaluer, pendant qu'elle attend sur une fréquence particulière des signaux de synchronisation lui permettant de tenter d'effectuer une synchronisation sur la fréquence, si le signal sur la fréquence présente une caractéristique particulière du système de radiocommunication ; et
abandonner son attente sur la fréquence particulière et s'accorder sur une nouvelle fréquence avant le terme de la tentative de synchronisation sur la fréquence particulière si elle établit que le signal sur la fréquence particulière ne présente pas la caractéristique particulière.

2. Procédé selon la revendication 1, l'étape consistant à évaluer si le signal présente la caractéristique particulière comprenant l'étape consistant à évaluer si le signal présente une caractéristique du schéma de modulation radio utilisé dans le système de radiocommunication.

3. Procédé selon la revendication 2, l'étape consistant à évaluer si le signal présente la caractéristique particulière comprenant l'étape consistant à évaluer si le signal présente des caractéristiques de déplacement de phase ou de fréquence particulières du schéma de modulation du système de radiocommunication.

4. Procédé selon la revendication 3, l'étape consistant à évaluer si le signal présente des caractéristiques de déplacement de phase ou de fréquence particulières du schéma de modulation du système de radiocommunication comprenant l'étape consistant à analyser les déplacements de phase ou de fréquence entre des échantillons ou parties sélectionnés successifs du signal sur la fréquence et à comparer les déplacements de phase ou de fréquence observés aux déplacements de phase ou de fréquence escomptés pour le schéma de modulation souhaité.

5. Procédé selon la revendication 3 ou 4, comprenant l'étape consistant à utiliser l'écart du déplacement de phase ou de fréquence observé moyen pour le signal évalué par rapport à la valeur escomptée si le signal devait porter la forme de modulation correcte et/ou à utiliser la proportion des déplacements de phase ou de fréquence observés prenant les valeurs du schéma de modulation souhaité dans le but d'établir un niveau d'une probabilité que le signal provient du système de radiocommunication correct.

6. Procédé selon l'une quelconque des revendications précédentes, l'étape consistant à évaluer si le signal présente la caractéristique particulière comprenant l'étape consistant à attribuer une probabilité que le signal présente cette caractéristique compte tenu de l'évaluation du signal.

7. Unité radio mobile d'un système de radiocommunication mobile, l'unité radio mobile comprenant :
un moyen conçu pour balayer et tenter d'effectuer une synchronisation successivement sur chaque fréquence dans une liste mémorisée de fréquences utilisées par le système de radiocommunication ;
l'unité radio mobile étant **caractérisée en ce qu'**elle comprend en outre :
un moyen conçu pour évaluer, pendant qu'elle attend sur une fréquence particulière des signaux de synchronisation lui permettant de tenter d'effectuer une synchronisation sur la fréquence, si le signal sur la fréquence présente une caractéristique particulière du système de radiocommunication ; et
un moyen conçu pour abandonner l'attente sur la fréquence particulière et s'accorder sur une nouvelle fréquence avant le terme de la tentative de synchronisation sur la fréquence particulière s'il est établi que le signal sur la fréquence particulière ne présente pas la caractéristique particulière.

8. Unité mobile selon la revendication 7, le moyen conçu pour évaluer si le signal présente la caractéristique particulière comprenant un moyen conçu pour évaluer si le signal présente une caractéristique du schéma de modulation radio utilisé dans le système de radiocommunication.

9. Unité mobile selon la revendication 8, le moyen conçu pour évaluer si le signal présente la caractéristique particulière comprenant un moyen conçu pour évaluer si le signal présente des caractéristiques de déplacement de phase ou de fréquence particulières du schéma de modulation du système de radiocommunication.

10. Unité mobile selon la revendication 9, comprenant un moyen conçu pour établir un niveau d'une probabilité que le signal provient du système de radiocommunication correct compte tenu de l'écart du déplacement de phase ou de fréquence observé moyen pour le signal évalué par rapport à la valeur escomptée si le signal devait porter la forme de modulation correcte et/ou compte tenu de la proportion des déplacements de phase ou de fréquence observés prenant les valeurs du schéma de modulation souhaité.

11. Élément de programme informatique comprenant des parties de code de logiciel informatique permettant de mettre en oeuvre le procédé selon l'une quelconque des revendications 1 à 6 une fois installé sur un moyen de traitement de données.
